# EUROPEAN PATENT SPECIFICATION

(11) **EP 4 407 964 B1**
(45) Date of publication and mention of the grant of the patent: **26.11.2025**
(21) Application number: 23829602.4
(22) Date of filing: 11.04.2023
(51) Int. Cl.: H04M 1/02, H04M 1/18, H04M 1/03

(54) **ELECTRONIC DEVICE**
ELEKTRONISCHE VORRICHTUNG
DISPOSITIF ÉLECTRONIQUE

(30) Priority: 30.06.2022 CN 202210761510
(43) Date of publication of application: 31.07.2024
(73) Proprietor: Honor Device Co., Ltd., Shenzhen, Guangdong 518040 (CN)
(72) Inventor: SONG, Shaohua, Shenzhen, Guangdong 518040 (CN); XU, Chuan, Shenzhen, Guangdong 518040 (CN); LAI, Xu, Shenzhen, Guangdong 518040 (CN)
(74) Representative: Beder, Jens
(86) International application number: PCT/CN2023/087549
(87) International publication number: WO 2024/001412

(56) References cited:
- CN-A- 103 260 370
- CN-A- 108 322 584
- CN-A- 113 596 206
- US-A1- 2017 063 421
- US-A1- 2018 033 571
- US-A1- 2021 168 229

## Description

This application claims priority to Chinese Patent Application CN 117 376 464 A (Application No. 202210761510.5), filed with the China National Intellectual Property Administration on June 30, 2022 and entitled "ELECTRONIC DEVICE".

### TECHNICAL FIELD

Embodiments of this application relate to the field of terminal technologies, and in particular, to an electronic device.

### BACKGROUND

Currently, electronic devices such as computers and mobile phones have become inseparable from our lives, are seen everywhere in our lives, and greatly improve living standards of people. With rapid development of communication device technologies, a related display screen industry is also continuously developing, thereby making a display screen more widely used.

In a related technology, to fasten a display screen and a housing of an electronic device to each other, adhesive is usually disposed to bond the display screen to the housing. However, at a location close to a sound output hole, because a sound output effect needs to be achieved, there is usually a gap for outputting sound between one end of the display screen near the sound output hole and the housing. External grease or water easily erodes the display screen through the gap, and long-term accumulation of the grease or water in the gap easily causes yellow spots on the display screen. This affects a display effect of the display screen to a great extent.

US 2018/033571 A1 discloses an electronic device comprising a housing, a window arranged in at least a part of the housing, a display module arranged in a rear surface of the window, a heat radiating member arranged in a rear surface of the display module, a polymer member arranged between a first surface of the heat radiating member and the rear surface of the display module, and a conductive member arranged in a second surface of the heat radiating member opposite to the first surface of the heat radiating member, wherein a waterproof structure for the heat radiating member is configured using at least one of the polymer member or the conductive member.

### SUMMARY

To solve the problem of preventing external grease or water from eroding a display screen through a gap between the display screen and a housing and to avoid a case in which long-term accumulation of the grease or water in the gap causes yellow spots on the display screen, thereby improving a display effect of the display screen to a great extent, embodiments of this application provide an electronic device according to the enclosed claim 1. Advantageous features of the present invention are defined in the corresponding subclaims. In the following, parts of the description and drawings referring to embodiments, which are not covered by the claims, are not presented as embodiments of the invention but as examples useful for understanding the invention.

According to a first aspect, an embodiment of this application provides an electronic device. The electronic device includes at least a display screen and a housing. The housing includes a first region and a second region connected to the first region. A gap is formed between at least one end of the display screen and the first region, and a bonding member is disposed between the second region and a surface that is of the display screen and that faces the second region. There is at least one opening on the bonding member, and the opening is in communication with the gap. The electronic device further includes an absorption member, the absorption member includes at least a first part, and the first part is at least partially located in the opening.

According to the electronic device provided in this embodiment of this application, in the electronic device, the gap is formed between the at least one end of the display screen and the first region of the housing, the bonding member is disposed between the second region of the housing and the surface that is of the display screen and that faces the second region, and at least one opening that is in communication with the gap is disposed on the bonding member. The first part that is used to absorb grease or water is disposed in the opening. When external grease enters space between the housing and the display screen through the gap between an end part of the display screen and the first region of the housing, the first part can absorb the external grease or water, to implement a sealing and waterproof function. In this way, the external grease or water can be prevented from eroding the display screen through the gap between the display screen and the housing, and a case in which long-term accumulation of the grease or water in the gap causes yellow spots on the display screen can be avoided, so that a display effect of the display screen can be improved to a great extent.

In a possible implementation, the first part of the absorption member is used to absorb contaminants.

In a possible implementation, the contaminants include grease and water.

In a possible implementation, the electronic device further includes at least one camera assembly, the absorption member further includes a second part, and the second part is located on a periphery of the camera assembly. The second part is disposed on the periphery of the camera assembly, so that when water or grease is relatively close to the camera assembly, the second part can implement a function of absorbing and blocking the water or grease, thereby preventing the grease or water from entering the camera assembly.

In a possible implementation, the second part is connected to the first part. The second part is connected to the first part. Compared with a design in which the second part and the first part are separated, an absorption effect of the second part and the first part can be improved. For example, after external grease enters the space between the housing and the display screen through the gap between the end part of the display screen and the first region of the housing, both the first part and the second part can absorb the external grease or water, to implement a sealing and waterproof function, that is, a path for protecting against the external grease or water can be increased.

In a possible implementation, the bonding member includes at least a first segment, a second segment, and a third segment connected to the first segment and the second segment. The first segment and the second segment are parallel to each other, and the third segment is separately perpendicular to the first segment and the second segment. The opening is located on the third segment, and an extension direction of the opening is the same as an extension direction of the first segment and the second segment.

The bonding member is designed as the first segment, the second segment, and the third segment, the first segment and the second segment are parallel to each other, and the third segment is separately perpendicular to the first segment and the second segment. This can ensure reliability of bonding between the second region of the housing and the surface that is of the display screen and that faces the second region while a bonding area of the bonding member is increased.

In a possible implementation, there is a spacing between the first part and the opening. The spacing is designed between the first part and the opening, so that when the first part absorbs a sufficient amount of grease or water, a case in which bonding performance of the bonding member is adversely affected and a bonding effect of the bonding member is damaged due to direct contact between the first part in the opening and the bonding member can be avoided.

In a possible implementation, the absorption member further includes at least one third part, and the third part is connected to the first part, the third part is connected to the second part, or the third part is connected to both the first part and the second part.

The at least one third part is disposed, so that a path for protecting against grease or water can be further increased based on the first part and the second part.

In a possible implementation, an extension direction of the third part is perpendicular to the extension direction of the opening. After the external grease or water enters the opening through the gap between the end part of the display screen and the first region of the housing, the external grease or water flows relative to the extension direction of the opening. The extension direction of the third part is designed to be perpendicular to the extension direction of the opening, so that after the external grease or water flows into the first part through the opening, the extension direction of the third part lowers a flowing speed of the external grease or water, that is, an effect of protecting against the grease or water is improved in another dimension other than increasing the protection path.

In a possible implementation, there are two third parts, and the two third parts are symmetrically disposed in the extension direction of the opening.

The two third parts are symmetrically disposed in the extension direction of the opening, so that after the external grease or water flows into the first part through the opening, a flowing path of the external grease or water flowing from the first part into the third part can be dispersed to some extent, and therefore, the effect of protecting against the grease or water can be further improved.

In a possible implementation, there are three or more third parts, and the three or more third parts are evenly spaced apart in a circumferential direction of the camera assembly.

More third parts are designed, and a plurality of third parts are evenly spaced apart in the circumferential direction of the camera assembly, so that the grease or water can dispersedly flow in a plurality of directions in the extension direction of the third part, and therefore, the effect of protecting against the grease or water can be improved to a great extent.

In a possible implementation, the third part includes a first absorption portion and a second absorption portion connected to the first absorption portion; one end of the first absorption portion is connected to the first part, one end of the first absorption portion is connected to the second part, or one end of the first absorption portion is connected to both the first part and the second part; and one end of the first absorption portion is connected to the second absorption portion, and a preset included angle is formed between the first absorption portion and the second absorption portion, where the preset included angle is greater than 0 degrees.

The third part is designed to include the first absorption portion and the second absorption portion, the first absorption portion is connected to the second absorption portion, and the preset included angle greater than 0 degrees is formed between the first absorption portion and the second absorption portion. After the external grease or water flows into the third part, because there is the preset included angle greater than 0 degrees between the first absorption portion and the second absorption portion of the third part, a flowing speed at which the grease or water flows from the first absorption portion on the third part to the second absorption portion or from the second absorption portion to the first absorption portion can be lowered to some extent, so that the effect of protecting against the grease or water can be further improved.

In a possible implementation, an end that is of the second absorption portion and that is away from the first absorption portion extends toward the bonding member. In this way, the second absorption portion is designed to extend toward the bonding member relative to the first absorption portion, so that a flowing direction of the grease or water can be changed, and therefore, the grease or water forms a half-loop flowing path, thereby increasing an overall flowing path of the grease or water to some extent.

In a possible implementation, the first part, the second part, and the third part use a porous structure. The first part, the second part, and the third part that are in the porous structure can ensure an effect of absorbing the grease or water.

In a possible implementation, the first part, the second part, and the third part are foam or foamed materials, and the foamed materials are polytetrafluoroethylene, polyurethane, or a composite material formed by using a copolymer of polytetrafluoroethylene and fluorinated ethylene propylene. Polytetrafluoroethylene has excellent chemical stability, corrosion resistance, sealing performance, high lubrication and non-stickiness, electrical insulation, and good aging resistance. Polyurethane is a thermoplastic linear structure with good stability, chemical resistance, and resilience and mechanical performance, and has less compression deformation. The copolymer of polytetrafluoroethylene and fluorinated ethylene propylene has good processability of thermoplastic plastics.

In a possible implementation, the display screen includes a touch panel and a liquid crystal display that are stacked, and a surface that is of the liquid crystal display and that is away from the touch panel is connected to the second region by using the bonding member.

### BRIEF DESCRIPTION OF DRAWINGS

FIG. 1 is a schematic diagram of a three-dimensional structure of an electronic device according to an embodiment of this application;
FIG. 2 is a schematic diagram of an exploded structure of an electronic device according to an embodiment of this application;
FIG. 3 is a schematic diagram of cross-sectional structures of a display screen and a housing in an electronic device in a conventional technology;
FIG. 4 is a schematic diagram of a structure of a top part of an electronic device in a conventional technology;
FIG. 5 is a schematic diagram of cross-sectional structures of a display screen and a housing in an electronic device according to an embodiment of this application;
FIG. 6 is a schematic diagram of a structure of a top part of an electronic device according to an embodiment of this application; and
FIG. 7 is a schematic diagram of a structure of a top part of an electronic device according to an embodiment of this application.

Descriptions of reference numerals:
100-Electronic device; 110-Display screen;
111-First hole; 112-Touch panel;
113-Liquid crystal display; 120-Middle frame;
121-Metal middle plate; 1221-Top border;
1222-Bottom border; 1223-Left border;
1224-Right border; 130-Circuit board;
140-Battery; 150-Rear housing;
151-Second hole; 161-Front-facing camera assembly;
162-Rear-facing camera assembly; 170-Housing;
171-First region; 1711-Gap;
172-Second region; 180-Bonding member;
181-First segment; 182-Second segment;
183-Third segment; 1831-Opening;
191-First part; 1911-Spacing;
190-Absorption member; 192-Second part;
193-Third part; 1931-First absorption portion;
1932-Second absorption portion; 200-Contaminant;
300-Adhesive; 400-Foam.

### DESCRIPTION OF EMBODIMENTS

Terms used in the implementation part of this application are merely intended to explain specific embodiments of this application and are not intended to limit this application. Implementations of the embodiments of this application are described in detail below with reference to the accompanying drawings.

Embodiments of this application provide an electronic device that may include but is not limited to a mobile or fixed terminal with a display screen, for example, a mobile phone, a tablet computer, a notebook computer, an ultra-mobile personal computer (ultra-mobile personal computer, UMPC), a handheld computer, a walkie-talkie, a netbook, a point of sales (Point of sales, POS) terminal, a personal digital assistant (personal digital assistant, PDA), a wearable device, a virtual reality device, a wireless USB flash, a Bluetooth speaker/headset, in-vehicle original equipment, an event data recorder, or a security protection device.

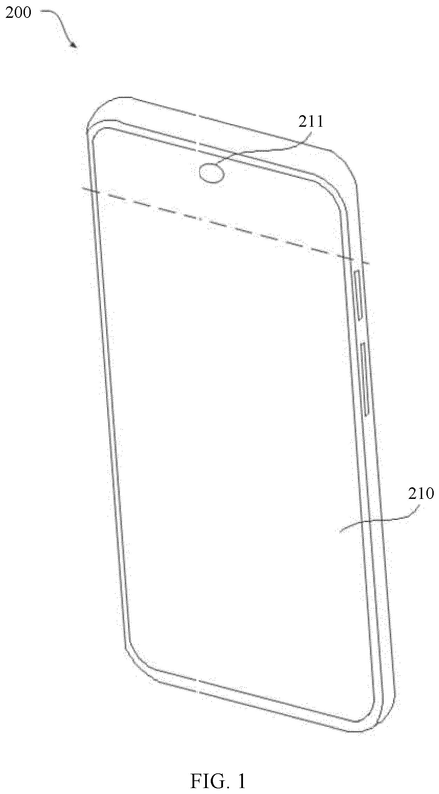

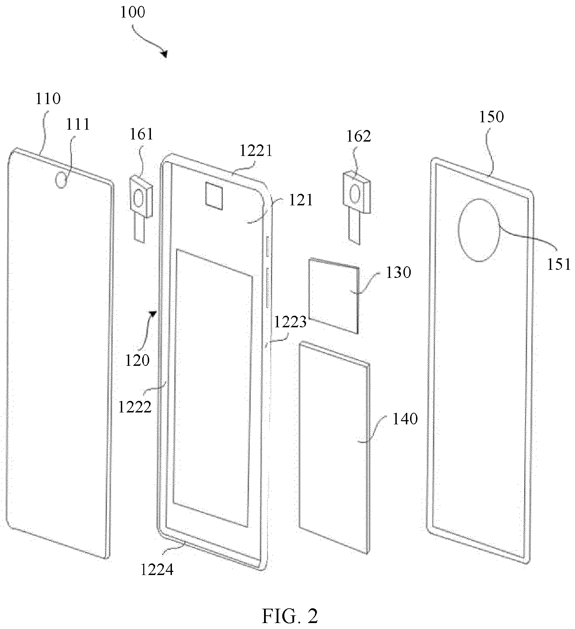

Refer to FIG. 1 and FIG. 2. In the embodiments of this application, a mobile phone 100 is used as an example of the electronic device for description. The mobile phone 100 provided in the embodiments of this application may be a curved-screen mobile phone or a flat-screen mobile phone, and may be a bar-type mobile phone or a foldable screen mobile phone. In the embodiments of this application, a bar-type flat-screen mobile phone is used as an example for description. FIG. 1 and FIG. 2 respectively show an integral structure and a split structure of the mobile phone 100. A display screen 110 of the mobile phone 100 provided in the embodiments of this application may be a water drop screen, a notch screen, a full screen, or a hole-punch screen (as shown in FIG. 1). For example, a first hole 111 is disposed on the display screen 110. A hole-punch screen is used as an example in the following descriptions.

As shown in FIG. 2, the mobile phone 100 may include the display screen 110, a middle frame 120, a rear housing 150, and a battery 140 located between the middle frame 120 and the rear housing 150. The battery 140 may be disposed on a surface that is of the middle frame 120 and that faces the rear housing 150 (as shown in FIG. 2), or the battery 140 may be disposed on a surface that is of the middle frame 120 and that faces the display screen 110. For example, there may be a battery compartment (not shown in the figure) on the surface that is of the middle frame 120 and that faces the rear housing 150, and the battery 140 is mounted in the battery compartment.

In some other examples, the mobile phone 100 may further include a circuit board 130. The circuit board 130 may be disposed on the middle frame 120. For example, the circuit board 130 may be disposed on the surface that is of the middle frame 120 and that faces the rear housing 150 (as shown in FIG. 2), or the circuit board 130 may be disposed on the surface that is of the middle frame 120 and that faces the display screen 110. The display screen 110 and the rear housing 150 are respectively located on two sides of the middle frame 120.

The battery 140 may be connected to the circuit board 130 by using a power management module and a charging management module. The power management module receives an input of the battery 140 and/or the charging management module, and supplies power to a processor, an internal memory, an external memory, the display screen 110, camera assemblies (for example, a front-facing camera assembly 161 and a rear-facing camera assembly 162 in FIG. 2), a communication module, and the like. The power management module may be further configured to monitor parameters such as a capacity of the battery 140, a quantity of cycles of the battery 140, and a state of health (current leakage or impedance) of the battery 140. In some other embodiments, the power management module may be alternatively disposed in a processor of the circuit board 130. In some other embodiments, the power management module and the charging management module may be alternatively disposed in a same component.

When the mobile phone 100 is a flat-screen mobile phone 100, the display screen 110 may be an organic light-emitting diode (Organic Light-Emitting Diode, OLED) display screen, or may be a liquid crystal display (Liquid Crystal Display, LCD). When the mobile phone 100 is a curved-screen mobile phone, the display screen 110 may be an OLED display screen.

Still as shown in FIG. 2, the middle frame 120 may include a metal middle plate 121 and a border, and the border is disposed around a periphery of the metal middle plate 121 for one circle. The border may usually include a top border 1221, a bottom border 1222, a left border 1223, and a right border 1224, and the top border 1221, the bottom border 1222, the left border 1223, and the right border 1224 form the border of a square ring structure. A material of the metal middle plate 121 includes but is not limited to an aluminum plate, aluminum alloy, stainless steel, a steel-aluminum composite die-casting plate, titanium alloy, magnesium alloy, or the like. The border may be a metal border, a ceramic border, or a glass border. When the border is a metal border, a material of the metal border includes but is not limited to aluminum alloy, stainless steel, a steel-aluminum composite die-casting plate, titanium alloy, or the like. The metal middle plate 121 and the border may be clamped, welded, bonded, or integrally formed, or the metal middle plate 121 and the border may be fixedly connected through injection molding.

As shown in FIG. 2, the top border 1221 is disposed opposite to the bottom border 1222, the left border 1223 is disposed opposite to the right border 1224, the top border 1221 is separately connected to one end of the left border 1223 and one end of the right border 1224 to form rounded corners, and the bottom border 1222 is separately connected to the other end of the left border 1223 and the other end of the right border 1224 to form rounded corners, to jointly form a round-cornered rectangular region. A ground surface of the rear housing is disposed in the round-cornered rectangular region, and is separately connected to the top border 1221, the bottom border 1222, the left border 1223, and the right border 1224. It may be understood that the ground surface of the rear housing may be the rear housing 150 of the mobile phone 100.

The rear housing 150 may be a metal rear housing, a glass rear housing, a plastic rear housing, or a ceramic rear housing. In the embodiments of this application, a material of the rear housing 150 is not limited, and is not limited to the foregoing examples either.

It should be noted that, in some examples, the rear housing 150 of the mobile phone 100 may be connected to the border to form a unibody (Unibody) rear housing. For example, the mobile phone 100 may include the display screen 110, the metal middle plate 121, and the rear housing. The rear housing may be a unibody (Unibody) rear housing including the border and the rear housing 150. In this way, the circuit board 130 and the battery 140 are located in space surrounded by the metal middle plate 121 and the rear housing.

In addition, in a possible implementation, a second hole 151 may be further disposed on the rear housing 150 as a light-transmitting region of the rear-facing camera assembly 162. Similarly, the first hole 111 on the display screen 110 may also be used as a light-transmitting region of the front-facing camera assembly 161.

It may be understood that the structure illustrated in the embodiments of this application does not constitute a specific limitation on the electronic device. In some other embodiments of the embodiments of this application, the electronic device may include more or fewer components than those shown in the figure, may combine some components, may split some components, or may have different component arrangements. For example, the mobile phone 100 may further include components such as a camera flash. The components shown in the figure may be implemented by using hardware, software, or a combination of software and hardware.

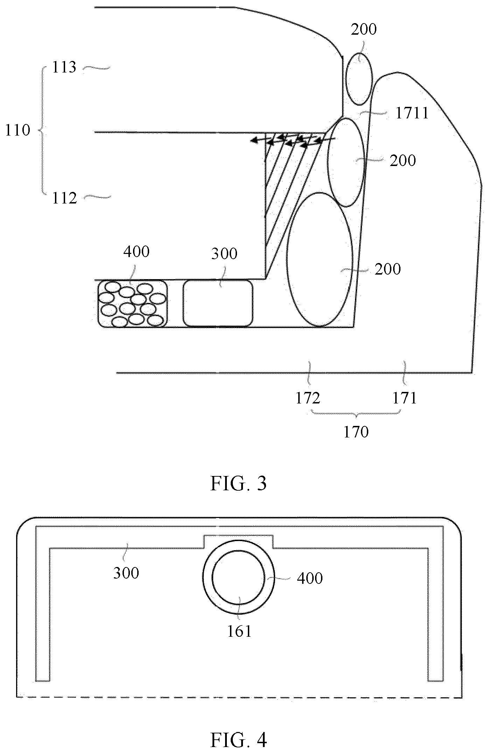

In a related technology, as shown in FIG. 3, to fasten the display screen 110 and a housing 170 of the electronic device to each other, adhesive 300 is usually disposed between a second region 172 of the housing 170 and a surface that is of the display screen 110 and that faces the second region 172, to bond the display screen 110 to the housing 170.

As shown in FIG. 4, to prevent external grease or water from eroding the camera assembly (such as the front-facing camera assembly 161), foam 400 is usually disposed on a periphery of the front-facing camera assembly 161. However, for example, at a location close to a sound output hole, because a sound output effect needs to be achieved, there is usually a gap 1711 for outputting sound between one end of the display screen 110 near the sound output hole and the housing 170. The external grease or water easily erodes the display screen 110 through the gap 1711, and in addition, long-term accumulation of the grease or water in the gap 1711 easily causes yellow spots on the display screen 110. This affects a display effect of the display screen 110 to a great extent.

Based on this, an embodiment of this application provides a new electronic device (such as a mobile phone 100 or a computer), to resolve the foregoing technical problem. Specifically, the electronic device may include at least a display screen and a housing. The housing may include a first region and a second region connected to the first region. A gap is formed between at least one end of the display screen and the first region, and a bonding member is disposed between the second region and a surface that is of the display screen and that faces the second region. The bonding member has at least one opening, the opening is in communication with the gap, and a first part is disposed in the opening. External grease enters space between the housing and the display screen through the gap, and the first part is used to absorb the external grease. In this way, external grease or water can be prevented from eroding the display screen through the gap between the display screen and the housing, and a case in which long-term accumulation of the grease or water in the gap causes yellow spots on the display screen can be avoided, so that a display effect of the display screen can be improved to a great extent.

A specific structure of the electronic device is described in detail below with reference to specific accompanying drawings.

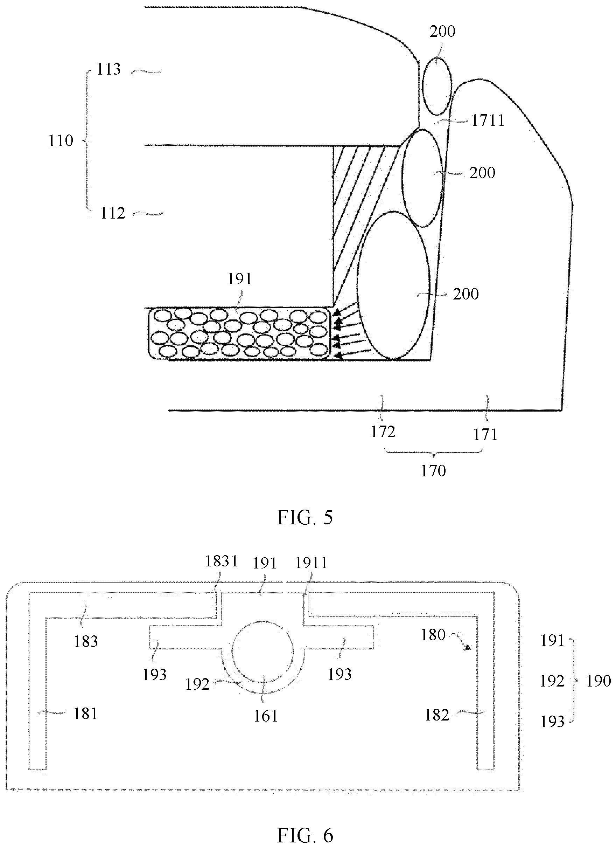

As shown in FIG. 5 and FIG. 6, an embodiment of this application provides an electronic device (for example, the electronic device is a mobile phone 100). The mobile phone 100 may include at least a display screen 110 and a housing 170. The housing 170 may include a first region 171 and a second region 172, the first region 171 is connected to the second region 172, and a gap 1711 is formed between at least one end of the display screen 110 and the first region 171.

For example, a sound output hole (not shown in the figure) is usually located at a top end of the display screen 110. To achieve a sound output effect, the gap 1711 for outputting sound needs to be formed between the top end of the display screen 110 and the first region 171.

Still as shown in FIG. 6, a bonding member 180 is disposed between the second region 172 and a surface that is of the display screen 110 and that faces the second region 172. The bonding member 180 has at least one opening 1831, and the opening 1831 is in communication with the gap 1711. In addition, the mobile phone 100 may further include an absorption member 190. The absorption member 190 may include at least a first part 191, and the first part 191 is at least partially located in the opening 1831.

In a possible implementation, the first part 191 of the absorption member 190 is used to absorb contaminants 200. Specifically, in some embodiments, the contaminants 200 may include grease and water. In this way, when external grease or water enters space between the housing 170 and the display screen 110 through the gap 1711, the first part 191 may be used to absorb the grease or water.

In the mobile phone 100, the gap 1711 is formed between the at least one end of the display screen 110 and the first region 171 of the housing 170, the bonding member 180 is disposed between the second region 172 of the housing 170 and the surface that is of the display screen 110 and that faces the second region 172, at least one opening 1831 that is in communication with the gap 1711 is disposed on the bonding member 180, and the first part 191 that is used to absorb grease or water is disposed in the opening 1831. When the external grease enters space between the housing 170 and the display screen 110 through the gap 1711 between an end part of the display screen 110 and the first region 171 of the housing 170, the first part 191 serves as a grease absorption region, and can absorb grease or water, to implement a sealing and waterproof function. In this way, the external grease or water can be prevented from eroding the display screen 110 through the gap 1711 between the display screen 110 and the housing 170, and a case in which long-term accumulation of the grease or water in the gap 1711 causes yellow spots on the display screen 110 can be avoided, so that a display effect of the display screen 110 can be improved to a great extent.

In this embodiment of this application, the mobile phone 100 may further include at least one camera assembly (for example, a front-facing camera assembly 161 or a rear-facing camera assembly 162, where the front-facing camera assembly 161 is used as an example in this embodiment of this application). The absorption member 190 may further include a second part 192, and the second part 192 may be located on a periphery of the front-facing camera assembly 161.

The second part 192 is disposed on the periphery of the front-facing camera assembly 161, so that when water or grease is relatively close to the front-facing camera assembly 161, the second part 192 serves as a sealing region, to implement a function of absorbing and blocking the water or grease. Therefore, the grease or water can be prevented from entering the front-facing camera assembly 161, and the front-facing camera assembly 161 is sealed and protected.

In this embodiment of this application, the second part 192 is connected to the first part 191. The second part 192 is connected to the first part 191. Compared with a design in which the second part 192 and the first part 191 are separated, an absorption effect of the second part 192 and the first part 191 can be improved. For example, after the external grease or water enters the space between the housing 170 and the display screen 110 through the gap 1711 between the end part of the display screen 110 and the first region 171 of the housing 170, both the first part 191 and the second part 192 can absorb the external grease or water, to implement a sealing and waterproof function, that is, a path for protecting against the external grease or water can be increased.

In this embodiment of this application, the bonding member 180 may include at least a first segment 181, a second segment 182, and a third segment 183. The third segment 183 is separately connected to the first segment 181 and the second segment 182, the first segment 181 and the second segment 182 are parallel to each other, and the third segment 183 is separately perpendicular to the first segment 181 and the second segment 182.

In addition, the opening 1831 is located on the third segment 183, and an extension direction of the opening 1831 may be the same as an extension direction of the first segment 181 and the second segment 182.

The bonding member 180 is designed as the first segment 181, the second segment 182, and the third segment 183, the first segment 181 and the second segment 182 are parallel to each other, and the third segment 183 is separately perpendicular to the first segment 181 and the second segment 182, so that reliability of bonding between the second region 172 of the housing 170 and the surface that is of the display screen 110 and that faces the second region 172 is ensured while a bonding area of the bonding member 180 is increased.

As shown in FIG. 6, in this embodiment of this application, there is a spacing 1911 between the first part 191 and the opening 1831. The spacing 1911 is designed between the first part 191 and the opening 1831, so that when the first part 191 absorbs a sufficient amount of grease or water, a case in which bonding performance of the bonding member 180 is adversely affected and a bonding effect of the bonding member 180 is damaged due to direct contact between the first part 191 in the opening 1831 and the bonding member 180 can be avoided.

In this embodiment of this application, the absorption member 190 may further include at least one third part 193. The third part 193 is connected to the first part 191; the third part 193 is connected to the second part 192; or the third part 193 is connected to both the first part 191 and the second part 192.

The at least one third part 193 is disposed, and the third part 193 is used as a grease evacuation region, so that grease or water in the first part 191 used as the grease absorption region can be evacuated to the housing 170, thereby further increasing the path for protecting against the grease or water based on the first part 191 and the second part 192.

Specifically, the first part 191, the second part 192, and the third part 193 have sealing and waterproof characteristics. The first part 191, the second part 192, and the third part 193 absorb and spread the grease or water in the gap 1711 to the housing 170, so that the grease or water is evacuated to protect the display screen 110, and a problem that accumulation of the grease or water in the gap 1711 easily causes yellow spots on the display screen 110 is resolved or alleviated.

In this embodiment of this application, an extension direction of the third part 193 may be perpendicular to the extension direction of the opening 1831.

After the external grease or water enters the opening 1831 through the gap 1711 between the end part of the display screen 110 and the first region 171 of the housing 170, the external grease or water flows relative to the extension direction of the opening 1831. The extension direction of the third part 193 is designed to be perpendicular to the extension direction of the opening 1831, so that after the external grease or water flows into the first part 191 through the opening 1831, the extension direction of the third part 193 lowers a flowing speed of the external grease or water, that is, an effect of protecting against the grease or water is improved in another dimension other than increasing the protection path.

In addition, as shown in FIG. 6, in this embodiment of this application, there may be two third parts 193, and the two third parts 193 may be symmetrically disposed in the extension direction of the opening 1831.

The two third parts 193 are symmetrically disposed in the extension direction of the opening 1831, so that after the external grease or water flows into the first part 191 through the opening 1831, a flowing path of the external grease or water flowing from the first part 191 into the third part 193 can be dispersed to some extent, and therefore, the effect of protecting against the grease or water can be further improved.

In addition, in some embodiments, there may be three or more third parts 193, and the three or more third parts 193 may be evenly spaced apart in a circumferential direction of the front-facing camera assembly 161.

More third parts 193 are designed, and a plurality of third parts 193 are evenly spaced apart in the circumferential direction of the front-facing camera assembly 161, so that the grease or water can dispersedly flow in a plurality of directions in the extension direction of the third part 193, and therefore, the effect of protecting against the grease or water can be improved to a great extent.

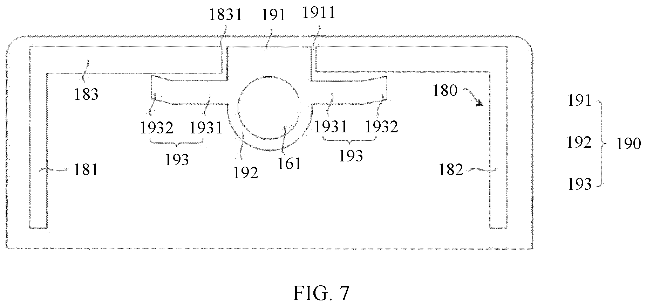

In this embodiment of this application, as shown in FIG. 7, the third part 193 may include a first absorption portion 1931 and a second absorption portion 1932. The first absorption portion 1931 is connected to the second absorption portion 1932. One end of the first absorption portion 1931 is connected to the first part 191; one end of the first absorption portion 1931 is connected to the second part 192; or one end of the first absorption portion 1931 is connected to both the first part 191 and the second part 192. One end of the first absorption portion 1931 is connected to the second absorption portion 1932, and a preset included angle is formed between the first absorption portion 1931 and the second absorption portion 1932, where the preset included angle may be greater than 0 degrees.

The third part 193 is designed to include the first absorption portion 1931 and the second absorption portion 1932, the first absorption portion 1931 is connected to the second absorption portion 1932, and the preset included angle greater than 0 degrees is formed between the first absorption portion 1931 and the second absorption portion 1932. After the external grease or water flows into the third part 193, because there is the preset included angle greater than 0 degrees between the first absorption portion 1931 and the second absorption portion 1932 of the third part 193, a flowing speed at which the grease or water flows from the first absorption portion 1931 on the third part 193 to the second absorption portion 1932 or flows from the second absorption portion 1932 to the first absorption portion 1931 can be lowered to some extent, so that the effect of protecting against the grease or water can be further improved.

It may be understood that, in a possible implementation, one end that is of the second absorption portion 1932 and that is away from the first absorption portion 1931 may extend toward the bonding member 180. In this way, the second absorption portion 1932 is designed to extend toward the bonding member 180 relative to the first absorption portion 1931, so that a flowing direction of the grease or water can be changed, and the grease or water forms a half-loop flowing path, and therefore, an overall flowing path of the grease or water can be increased to some extent.

In addition, it may be understood that, in this embodiment of this application, the first part 191, the second part 192, and the third part 193 may use a porous structure. The first part 191, the second part 192, and the third part 193 that are in the porous structure can ensure an effect of absorbing the grease or water.

For example, in this embodiment of this application, the first part 191, the second part 192, and the third part 193 may be foam or foamed materials.

It should be noted that the foam may be closed-cell foam, semi-closed cell foam, or open-cell foam. This is not limited in this embodiment of this application. The closed-cell foam and the semi-closed cell foam have strong resilience performance and retention.

The foamed material may be polytetrafluoroethylene (Poly tetra fluoroethylene, PTFE), polyurethane (PU), or a composite material formed by using a copolymer of polytetrafluoroethylene and fluorinated ethylene propylene (Fluorinated ethylene propylene, FEP).

Polytetrafluoroethylene has excellent chemical stability, corrosion resistance, sealing performance, high lubrication and non-stickiness, electrical insulation, and good aging resistance. Polyurethane is a thermoplastic linear structure with good stability, chemical resistance, and resilience and mechanical performance, and has less compression deformation. The copolymer of polytetrafluoroethylene and fluorinated ethylene propylene has good processability of thermoplastic plastics.

It may be understood that, in this embodiment of this application, schematic diagrams 16 of partial structures of the electronic device that are shown in FIG. 6 and FIG. 7 are schematic diagrams of an upper half part obtained after the electronic device shown in FIG. 1 is divided along a dashed line.

In addition, as shown in FIG. 5, in this embodiment of this application, the display screen 110 may include a touch panel 112 and a liquid crystal display 113 that are stacked. A surface that is of the liquid crystal display 113 and that is away from the touch panel 112 may be connected to the second region 172 by using the bonding member 180.

In the descriptions of the embodiments of this application, it should be noted that unless otherwise specified or limited, terms "mount", "connect", and "connection" shall be understood in a broad sense, for example, may be a fixed connection, may be an indirect connection by using an intermediate medium, or may be a connection between insides of two elements or an interaction relationship between two elements. A person of ordinary skill in the art may understand specific meanings of the foregoing terms in the embodiments of this application based on a specific situation.

The apparatus or element referred to or implied in the embodiments of this application needs to have a specific orientation, be constructed and operated in a specific orientation, and therefore cannot be construed as a limitation on the embodiments of this specification. In the descriptions of the embodiments of this application, "a plurality of" means two or more, unless otherwise specifically specified.

The terms "first", "second", "third", "fourth", and the like (if existent) in the specification, claims, and accompanying drawings of the embodiments of this application are used to distinguish between similar objects, but are not necessarily used to describe a particular order or sequence. It should be understood that data used in such a way is interchangeable in proper situations, so that the embodiments of this application described herein can be implemented, for example, in orders other than those illustrated or described herein. In addition, the terms "may include", "have", and any variation thereof are intended to cover non-exclusive inclusion. For example, a process, a method, a system, a product, or a device that includes a series of steps or units is not necessarily limited to those steps or units that are clearly listed, but may include other steps or units that are not clearly listed or are inherent to the process, the method, the product, or the device.

## Claims

1. An electronic device (100), comprising at least the following:
at least one camera assembly (161), an absorption member (190), a display screen (110) and a housing (170), wherein
the housing (170) comprises a first region (171) and a second region (172) connected to the first region (171);
a gap (1711) is formed between at least one end of the display screen (110) and the first region (171), and a bonding member (180) is disposed between the second region (172) and a surface that is of the display screen (110) and that faces the second region (172);
there is at least one opening (1831) on the bonding member (180), and the opening (1831) is in communication with the gap (1711);
the absorption member (190) comprises at least a first part (191), and the first part (191) is at least partially located in the opening (1831);
the absorption member (190) further comprises a second part (192), and the second part (192) is located on a periphery of the camera assembly (161); and
the first part (191) is connected to the second part (192).

2. The electronic device according to claim 1, wherein
the first part (191) of the absorption member (190) is used to absorb contaminants, the contaminants comprise grease and water.

3. The electronic device (100) according to claim 1 or 2, wherein the bonding member (180) comprises at least a first segment (181), a second segment (182), and a third segment (183) connected to the first segment (181) and the second segment (182);
the first segment (181) and the second segment (182) are parallel to each other, and the third segment (183) is separately perpendicular to the first segment (181) and the second segment (182); and
the opening (1831) is located on the third segment (183), and an extension direction of the opening (1831) is the same as an extension direction of the first segment (181) and the second segment (182).

4. The electronic device (100) according to claim 3, wherein there is a spacing (1911) between the first part (191) and the opening (1831).

5. The electronic device (100) according to claim 3 or 4, wherein the absorption member (190) further comprises at least one third part (193); and
the third part (193) is connected to the first part (191); the third part (193) is connected to the second part (192); or the third part (193) is connected to both the first part (191) and the second part (192).

6. The electronic device (100) according to claim 5, wherein an extension direction of the third part (193) is perpendicular to the extension direction of the opening (1831).

7. The electronic device (100) according to claim 5 or 6, wherein there are two third parts (193), and the two third parts (193) are symmetrically disposed in the extension direction of the opening (1831).

8. The electronic device (100) according to claim 5 or 6, wherein there are three or more third parts (193); and
the three or more third parts (193) are evenly spaced apart in a circumferential direction of the camera assembly.

9. The electronic device (100) according to any one of claims 5 to 8, wherein the third part (193) comprises a first absorption portion (1931) and a second absorption portion (1932) connected to the first absorption portion (1931);
one end of the first absorption portion (1931) is connected to the first part (191); one end of the first absorption portion (1931) is connected to the second part (192); or one end of the first absorption portion (1931) is connected to both the first part (191) and the second part (192); and
one end of the first absorption portion (1931) is connected to the second absorption portion (1932), and a preset included angle is formed between the first absorption portion (1931) and the second absorption portion (1932), wherein the preset included angle is greater than 0 degrees.

10. The electronic device (100) according to claim 9, wherein an end that is of the second absorption portion (1932) and that is away from the first absorption portion (1931) extends toward the bonding member (180).

11. The electronic device (100) according to any one of claims 5 to 10, wherein the first part (191), the second part (192), and the third part (193) use a porous structure.

12. The electronic device (100) according to claim 11, wherein the first part (191), the second part (192), and the third part (193) are foam or foamed materials; and
the foamed materials are polytetrafluoroethylene, polyurethane, or a composite material formed by using a copolymer of polytetrafluoroethylene and fluorinated ethylene propylene.

13. The electronic device (100) according to any one of claims 1 to 12, wherein the display screen (113) comprises a touch panel (112) and a liquid crystal display screen (113) that are stacked; and
a surface that is of the liquid crystal display screen (113) and that is away from the touch panel (112) is connected to the second region (172) by using the bonding member (180).

## Patentansprüche

1. Eine elektronische Vorrichtung (100), die zumindest Folgendes umfasst:
mindestens eine Kamerabaugruppe (161), ein Absorptionsglied (190), einen Bildschirm (110) und ein Gehäuse (170), wobei
das Gehäuse (170) einen ersten Bereich (171) und einen mit dem ersten Bereich (171) verbundenen zweiten Bereich (172) umfasst;
zwischen mindestens einem Ende des Bildschirms (110) und dem ersten Bereich (171) ist ein Spalt (1711) gebildet, und zwischen dem zweiten Bereich (172) und einer dem zweiten Bereich (172) zugewandten Oberfläche des Bildschirms (110) ist ein Verbindungselement (180) angeordnet;
am Verbindungselement (180) befindet sich mindestens eine Öffnung (1831), und die Öffnung (1831) steht mit dem Spalt (1711) in Verbindung;
das Absorptionsglied (190) umfasst zumindest einen ersten Teil (191), wobei sich der erste Teil (191) mindestens teilweise in der Öffnung (1831) befindet;
das Absorptionsglied (190) umfasst ferner einen zweiten Teil (192), wobei sich der zweite Teil (192) am Rand der Kamerabaugruppe (161) befindet; und
der erste Teil (191) ist mit dem zweiten Teil (192) verbunden.

2. Die elektronische Vorrichtung nach Anspruch 1, wobei
der erste Teil (191) des Absorptionsglieds (190) zum Aufnehmen von Verunreinigungen dient, wobei die Verunreinigungen Fett und Wasser umfassen.

3. Die elektronische Vorrichtung (100) nach Anspruch 1 oder 2, wobei das Verbindungselement (180) zumindest ein erstes Segment (181), ein zweites Segment (182) und ein mit dem ersten Segment (181) und dem zweiten Segment (182) verbundenes drittes Segment (183) umfasst;
das erste Segment (181) und das zweite Segment (182) sind parallel zueinander und das dritte Segment (183) steht jeweils senkrecht zum ersten Segment (181) und zum zweiten Segment (182); und
die Öffnung (1831) befindet sich auf dem dritten Segment (183), und die Ausdehnungsrichtung der Öffnung (1831) entspricht der Ausdehnungsrichtung des ersten Segments (181) und des zweiten Segments (182).

4. Die elektronische Vorrichtung (100) nach Anspruch 3, wobei ein Abstand (1911) zwischen dem ersten Teil (191) und der Öffnung (1831) vorhanden ist.

5. Die elektronische Vorrichtung (100) nach Anspruch 3 oder 4, wobei das Absorptionsglied (190) ferner zumindest einen dritten Teil (193) umfasst; und
der dritte Teil (193) ist mit dem ersten Teil (191) verbunden; der dritte Teil (193) ist mit dem zweiten Teil (192) verbunden; oder der dritte Teil (193) ist sowohl mit dem ersten Teil (191) als auch mit dem zweiten Teil (192) verbunden.

6. Elektronisches Gerät (100) nach Anspruch 5, wobei eine Verlängerungsrichtung des dritten Teils (193) senkrecht zur Verlängerungsrichtung der Öffnung (1831) verläuft.

7. Elektronisches Gerät (100) nach Anspruch 5 oder 6, wobei zwei dritte Teile (193) vorhanden sind und diese beiden dritten Teile (193) symmetrisch in der Verlängerungsrichtung der Öffnung (1831) angeordnet sind.

8. Elektronisches Gerät (100) nach Anspruch 5 oder 6, wobei drei oder mehr dritte Teile (193) vorhanden sind; und
die drei oder mehr dritten Teile (193) sind in Umfangsrichtung der Kameraeinheit gleichmä-ßig beabstandet angeordnet.

9. Elektronisches Gerät (100) nach einem der Ansprüche 5 bis 8, wobei der dritte Teil (193) einen ersten Absorptionsabschnitt (1931) und einen zweiten Absorptionsabschnitt (1932) umfasst, der mit dem ersten Absorptionsabschnitt (1931) verbunden ist;
ein Ende des ersten Absorptionsabschnitts (1931) ist mit dem ersten Teil (191) verbunden; ein Ende des ersten Absorptionsabschnitts (1931) ist mit dem zweiten Teil (192) verbunden; oder ein Ende des ersten Absorptionsabschnitts (1931) ist sowohl mit dem ersten Teil (191) als auch mit dem zweiten Teil (192) verbunden; und
ein Ende des ersten Absorptionsabschnitts (1931) ist mit dem zweiten Absorptionsabschnitt (1932) verbunden, wobei ein voreingestellter Einschlusswinkel zwischen dem ersten Absorptionsabschnitt (1931) und dem zweiten Absorptionsabschnitt (1932) gebildet wird, wobei der voreingestellte Einschlusswinkel größer als 0 Grad ist.

10. Elektronisches Gerät (100) nach Anspruch 9, wobei ein Ende des zweiten Absorptionsabschnitts (1932), das vom ersten Absorptionsabschnitt (1931) entfernt ist, in Richtung des Klebeelements (180) verläuft.

11. Elektronisches Gerät (100) nach einem der Ansprüche 5 bis 10, wobei der erste Teil (191), der zweite Teil (192) und der dritte Teil (193) eine poröse Struktur verwenden.

12. Elektronisches Gerät (100) nach Anspruch 11, wobei der erste Teil (191), der zweite Teil (192) und der dritte Teil (193) aus Schaumstoffen oder geschäumten Materialien bestehen; und
die geschäumten Materialien sind Polytetrafluorethylen, Polyurethan oder ein Verbundmaterial, das aus einem Copolymerisation von Polytetrafluorethylen und fluorierten Ethylen-Propylen hergestellt wird.

13. Elektronisches Gerät (100) nach einem der Ansprüche 1 bis 12, wobei der Bildschirm (113) ein Touchpanel (112) und einen Liquidkristallbildschirm (113) umfasst, die übereinander gestapelt sind; und
eine Oberfläche des Liquidkristallbildschirms (113), die vom Touchpanel (112) entfernt ist, ist mit dem zweiten Bereich (172) durch das Klebeelement (180) verbunden.

## Revendications

1. Un dispositif électronique (100), comprenant au moins les éléments suivants :
au moins un ensemble caméra (161), un élément absorbant (190), un écran d'affichage (110) et un boîtier (170), dans lequel
le boîtier (170) comprend une première région (171) et une seconde région (172) reliée à la première région (171) ;
un espace (1711) est formé entre au moins une extrémité de l'écran d'affichage (110) et la première région (171), et un élément de liaison (180) est disposé entre la seconde région (172) et une surface de l'écran d'affichage (110) faisant face à la seconde région (172) ;
il existe au moins une ouverture (1831) sur l'élément de liaison (180), et l'ouverture (1831) est en communication avec l'espace (1711) ;
l'élément absorbant (190) comprend au moins une première partie (191), et la première partie (191) est au moins partiellement située dans l'ouverture (1831) ;
l'élément absorbant (190) comprend en outre une seconde partie (192), et la seconde partie (192) est disposée sur la périphérie de l'ensemble caméra (161) ; et
la première partie (191) est reliée à la seconde partie (192).

2. Le dispositif électronique selon la revendication 1, dans lequel
la première partie (191) de l'élément absorbant (190) est utilisée pour absorber les contaminants, ces contaminants comprenant de la graisse et de l'eau.

3. Le dispositif électronique (100) selon la revendication 1 ou 2, dans lequel l'élément de liaison (180) comprend au moins un premier segment (181), un second segment (182) et un troisième segment (183) relié au premier segment (181) et au second segment (182) ;
le premier segment (181) et le second segment (182) sont parallèles l'un à l'autre, et le troisième segment (183) est perpendiculaire séparément au premier segment (181) et au second segment (182) ; et
l'ouverture (1831) est située sur le troisième segment (183), et une direction d'extension de l'ouverture (1831) est identique à celle du premier segment (181) et du second segment (182).

4. Le dispositif électronique (100) selon la revendication 3, dans lequel un espace (1911) existe entre la première partie (191) et l'ouverture (1831).

5. Le dispositif électronique (100) selon la revendication 3 ou 4, dans lequel l'élément absorbant (190) comprend en outre au moins une troisième partie (193) ; et
la troisième partie (193) est reliée à la première partie (191); la troisième partie (193) est reliée à la seconde partie (192); ou la troisième partie (193) est reliée à la fois à la première partie (191) et à la seconde partie (192).

6. Le dispositif électronique (100) selon la revendication 5, dans lequel une direction d'extension de la troisième partie (193) est perpendiculaire à la direction d'extension de l'ouverture (1831).

7. Le dispositif électronique (100) selon la revendication 5 ou 6, dans lequel il y a deux troisièmes parties (193) et les deux troisièmes parties (193) sont disposées de manière symétrique dans la direction d'extension de l'ouverture (1831).

8. Le dispositif électronique (100) selon la revendication 5 ou 6, dans lequel il y a trois ou plusieurs troisièmes parties (193) ; et
les trois ou plusieurs troisièmes parties (193) sont réparties uniformément dans une direction circonférentielle de l'ensemble caméra.

9. Le dispositif électronique (100) selon l'une quelconque des revendications 5 à 8, dans lequel la troisième partie (193) comprend une première portion d'absorption (1931) et une seconde portion d'absorption (1932) connectée à la première portion d'absorption (1931) ;
une extrémité de la première portion d'absorption (1931) est connectée à la première partie (191); une extrémité de la première portion d'absorption (1931) est connectée à la seconde partie (192); ou une extrémité de la première portion d'absorption (1931) est connectée à la fois à la première partie (191) et à la seconde partie (192) ; et
une extrémité de la première portion d'absorption (1931) est connectée à la seconde portion d'absorption (1932), et un angle prédéfini est formé entre la première portion d'absorption (1931) et la seconde portion d'absorption (1932), l'angle prédéfini étant supérieur à 0 degré.

10. Le dispositif électronique (100) selon la revendication 9, dans lequel une extrémité de la seconde portion d'absorption (1932) qui est éloignée de la première portion d'absorption (1931) s'étend vers l'élément de liaison (180).

11. Le dispositif électronique (100) selon l'une quelconque des revendications 5 à 10, dans lequel la première partie (191), la seconde partie (192) et la troisième partie (193) utilisent une structure poreuse.

12. Le dispositif électronique (100) selon la revendication 11, dans lequel la première partie (191), la seconde partie (192) et la troisième partie (193) sont des mousses ou des matériaux expansés ; et
les matériaux expansés sont du polytétrafluoroéthylène, du polyuréthane ou un matériau composite formé à partir d'un copolymère de polytétrafluoroéthylène et de propylène fluoré.

13. Le dispositif électronique (100) selon l'une quelconque des revendications 1 à 12, dans lequel l'écran d'affichage (113) comprend un panneau tactile (112) et un écran à cristaux liquides (113) empilés ; et
une surface de l'écran à cristaux liquides (113) qui est éloignée du panneau tactile (112) est reliée à la seconde région (172) à l'aide de l'élément de liaison (180).
